(19) Europäisches Patentamt
European Patent Office
Office européen des brevets

(11) **EP 4 156 069 A1**

(12) **EUROPÄISCHE PATENTANMELDUNG**

(43) Veröffentlichungstag:
**29.03.2023   Patentblatt 2023/13**

(21) Anmeldenummer: **21199448.8**

(22) Anmeldetag: **28.09.2021**

(51) Internationale Patentklassifikation (IPC):
**G06Q 40/00** (2006.01)      **G06Q 50/18** (2012.01)

(52) Gemeinsame Patentklassifikation (CPC):
**G06Q 40/00; G06Q 50/184**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft
80333 München (DE)**

(72) Erfinder:
• **Nierwetberg, Johannes
85617 Assling (DE)**
• **Kammerer, Susanne
91052 Erlangen (DE)**
• **Peuker, Thomas
91083 Baiersdorf-Hagenau (DE)**

(74) Vertreter: **Siemens Patent Attorneys
Postfach 22 16 34
80506 München (DE)**

(54) **VERFAHREN ZUR BESTIMMUNG EINER TECHNOLOGISCHEN RELEVANZ WENIGSTENS ZWEIER TECHNOLOGIE-PORTFOLIEN SOWIE COMPUTERPROGRAMM UND COMPUTERLESBARES SPEICHERMEDIUM**

(57)     Die Erfindung betrifft ein Verfahren zur Bestimmung einer technologischen Relevanz wenigstens zweier Technologie-Portfolien, ein entsprechendes Computerprogramm, das die Ausführung eines derartigen Verfahrens ermöglicht, sowie ein computerlesbares Speichermedium hierfür.

Dabei umfasst jedes Technologie-Portfolio mindestens ein Technologie-Element und mindestens ein Technologie-Element aus jedem der wenigstens zwei Technologie-Portfolien ist mindestens einer Technologieklasse zugeordnet.

Die technologische Relevanz wird mittels mindestens einer Portfoliodiskrepanz und mittels mindestens einer Datenanalogie bestimmt.

FIG 1

EP 4 156 069 A1

**Beschreibung**

Die vorliegende Erfindung betrifft ein Verfahren zur Bestimmung einer technologischen Relevanz wenigstens zweier Technologie-Portfolien, ein entsprechendes Computerprogramm, das die Ausführung eines derartigen Verfahrens ermöglicht und ein computerlesbares Speichermedium hierfür.

Technologische Beschreibungen, Veröffentlichungen, Fachartikel, Patentschriften, Gebrauchsmuster und ähnliche Publikationen mit technischem Inhalt stellen einen wesentlichen Teil der weltweit verfügbaren und täglich neu hinzukommenden Informationen dar - sowohl digital als auch in Printversionen.

Dabei ist es für einen Konsumenten dieser Informationen nicht immer möglich, die Relevanz dieser Technologien für sich selbst oder andere einzuschätzen oder gar zu vergleichen.

Ein Grund hierfür ist oft eine bewusst verzerrte Darstellung der dargebotenen Informationen, weil eine Veröffentlichung beispielsweise in einem Werbekontext verwendet wird, weil Begrifflichkeiten in einer Patentschrift stark abstrahiert werden oder weil eine Vielzahl an Zusatzinformationen zwar für ein Hintergrundverständnis einer beschriebenen Technologie, nicht aber für die beschriebene Technologie per se von Bedeutung sind.

Für den Konsument der Information ist es dabei oft von großer Bedeutung einen technologischen Kontext herzustellen, vor allem, wenn es sich um eine Mehrzahl von technologischen Beschreibungen, Veröffentlichungen, Fachartikeln, Anzeigen, Patentschriften, Gebrauchsmustern und ähnlichen Publikationen mit technischem Inhalt, also um ganze Technologie-Portfolien handelt.

Neben dem technologischen Kontext ist es oftmals von Interesse verschiedene Technologie-Portfolien miteinander zu vergleichen, um einerseits Technologieschwerpunkte identifizieren zu können, andererseits aber auch mögliche technologische Lücken eines bestimmten Portfolios ausfindig machen zu können. Diese Technologieschwerpunkte bzw. die möglichen technologischen Lücken können auch Technologieklassen zugeordnet sein, also Oberbegriffen bestimmter Technologien.

Aufgabe der Erfindung ist es, ein Verfahren anzugeben, das es ermöglicht, eine technologische Relevanz wenigstens zweier Technologie-Portfolien zu bestimmen und dabei auch Diskrepanzen und/oder Gemeinsamkeiten dieser Portfolien zu ermitteln.

Diese Aufgabe wird durch ein Verfahren nach Anspruch 1 gelöst. Diese Aufgabe wird ferner durch ein Computerprogramm nach Anspruch 8, sowie durch ein computerlesbares Speichermedium nach Anspruch 9 gelöst. Vorteilhafte Ausgestaltungen der Erfindung sind in den jeweils rückbezogenen Unteransprüchen angegeben.

Dabei wird ein Verfahren zur Bestimmung einer technologischen Relevanz wenigstens zweier Technologie-Portfolien bereitgestellt, wobei jedes Technologie-Portfolio mindestens ein Technologie-Element umfasst und wobei mindestens ein Technologie-Element aus jedem der wenigstens zwei Technologie-Portfolien mindestens einer Technologieklasse zugeordnet ist.

Das Verfahren umfasst folgende Schritte:

- Bestimmung mindestens einer Werthaltigkeit für mindestens eine Technologieklasse für jedes der wenigstens zwei Technologie-Portfolien,
- Bestimmung einer relativen Bedeutung für mindestens eine Technologieklasse für jedes der wenigstens zwei Technologie-Portfolien,
- Bestimmung mindestens einer Portfoliodiskrepanz mittels der bestimmten relativen Bedeutung,
- Bestimmung mindestens einer Datenanalogie mittels der bestimmten relativen Bedeutung,
- Ableiten mindestens einer technologischen Relevanz für mindestens eine Technologieklasse mittels der bestimmten mindestens einen Portfoliodiskrepanz und der bestimmten mindestens einen Datenanalogie.

Ein Technologie-Element umfasst beispielsweise aber nicht ausschließlich eine technologische Beschreibung, eine Veröffentlichung, einen Fachartikel, eine Anzeige, eine Patentschrift, eine Patentanmeldung, ein Gebrauchsmuster, ein Anforderungsprofil wie z.B. eine Stellenausschreibung oder ähnliche Publikationen mit technischem Inhalt.

Ein Technologie-Portfolio umfasst mindestens eines der genannten Technologie-Elemente.

Unter einer Technologieklasse ist ein Oberbegriff für eine bestimmte Technologie zu verstehen, der bestimmte Eigenschaften der bestimmten Technologie zusammenfasst. Beispiele für eine Technologieklasse sind, "Laden von Elektrofahrzeugen", "Abschaltung durch Temperaturinduktion", "Skalierbares WLAN-Gateway", oder "Polymerisiertes Fibrinpellet".

Technologieklassen können einen oder mehrer technologische Überbegriffe umfassen, sie können überlappend oder disjunkt sein, sie können eng oder breit gefasst sein.

Ein Technologie-Element ist dabei mindestens einer Technologieklasse zugeordnet. Dadurch entsteht eine Abbildung von Technologie-Elementen auf Technologieklassen. Für bestimmte Anwendungen ist es vorteilhaft, wenn jedes Technologie-Element genau einer Technologieklasse zugeordnet wird, für andere Anwendungen können Mehrfachzuordnungen besser geeignet sein.

Die Technologieklassen können hierbei von Anfang an festgelegt sein, sie können aber auch im Rahmen des Verfahrens bestimmt werden. Die Zuordnung selbst kann ebenfalls a priori erfolgen, beispielsweise aber nicht ausschließlich durch eine manuelle Zuordnung durch technische Experten, durch einen Künstliche-Intelligenz-Algorithmus und/oder durch einen Abgleich mit vorhandenen Zuordnungstabellen.

Für die Beispiele von Patentschriften und/oder Patentanmeldungen können diese Zuordnungen beispielsweise unter Zuhilfenahme von IPC-Klassen, CPC-Klassen und/oder F-Terms vorgenommen werden.

Unter einer Werthaltigkeit sind Werte zu verstehen, die mit einer Wichtigkeit und/oder einer Bedeutung für ein Technologie-Portfolio innerhalb einer betrachteten Technologieklasse assoziiert werden.

Die Werthaltigkeit kann beispielsweise aber nicht ausschließlich die Anzahl der Technologie-Elemente umfassen, sie kann einen monetären Wert der zu Grunde gelegten Technologien oder auch der Technologie-Elemente an sich umfassen, sie kann auf einer vorher festgelegten Rangfolge aufbauen oder auf andere denkbare Weisen zusammengesetzt sein, sodass einem Technologie-Portfolio eine Wertzahl zugewiesen werden kann.

Unter einer relativen Bedeutung ist eine Normierung zu verstehen, die die Werthaltigkeit einer Technologieklasse in Bezug zu einem zugrunde liegenden Technologie-Portfolio setzt. Eine bespielhafte relative Bedeutung ist eine bestimmte Werthaltigkeit einer Technologieklasse geteilt durch eine maximale Werthaltigkeit aller oder ausgewählter Technologieklassen eines bestimmten Technologie-Portfolios.

Unter einer Portfoliodiskrepanz ist ein Maß für eine Verschiedenheit eines Technologie-Portfolios zu verstehen, beispielsweise aber nicht ausschließlich eine Differenz zweier relativer Bedeutungen einer Technologieklasse unterschiedlicher Technologie-Portfolien.

Analog dazu ist unter einer Datenanalogie ein Maß für eine Gemeinsamkeit eines Technologie-Portfolios zu verstehen, beispielsweise aber nicht ausschließlich eine Summe zweier relativer Bedeutungen einer Technologieklasse unterschiedlicher Technologie-Portfolien.

Unter einer technologischen Relevanz einer Technologieklasse ist eine Zuordnung oder eine Funktion zu verstehen, die eine Portfoliodiskrepanz und eine Datenanalogie miteinander in Verbindung setzt. Die Funktion kann beliebig gewählt werden, in einem einfachen Fall ist eine technologische Relevanz eine paarweise Zuordnung von Portfoliodiskrepanzen zu den entsprechenden Werten der Datenanalogie.

Die Erfindung nutzt somit Zuordnungen von geeigneten Werthaltigkeiten und Bedeutungen zu bestimmten Technologien und/oder Technologiebegriffen, um auf einer Technologie-Portfoliobasis Ähnlichkeiten und Abweichungen sichtbar zu machen, die zudem auch über mögliche White Spots eines bestimmten Technologie-Portfolios Aufschluss geben. Dabei sind unter White Spots mögliche Lücken eines Technologie-Portfolios zu verstehen bezüglich Technologieklassen, die im Vergleich zu anderen Technologieklassen anderer Technologie-Portfolien sehr niedrige Werthaltigkeiten aufweisen.

Auf diese Weise werden Technologien einem direkten Vergleich zugänglich gemacht, der abhängig von einer Zuordnung einer Werthaltigkeit eine Bedeutungsaussage für eine technologische Fragestellung ermöglicht.

In einer bevorzugten Ausführungsform werden aus mindestens drei Technologie-Portfolien mindestens zwei Technologie-Portfolien zu einem Querschnittsportfolio kombiniert.

Dabei ist unter einem Querschnittsportfolio ein Technologie-Portfolio zu verstehen, das zumindest zwei Technologie-Portfolien repräsentiert. Diese erfindungsmäße Repräsentation kann beispielsweise aber nicht ausschließlich eine Bestimmung einer gemeinsamen relativen Bedeutung umfassen, beispielsweise durch Bestimmung eines Medians der jeweiligen relativen Bedeutungen, durch Bestimmung des Mittelwertes der jeweiligen relativen Bedeutungen oder durch Bestimmung von Extremwerten der jeweiligen relativen Bedeutungen.

Durch eine derartige Kombination wird eine einfachere Betrachtung eines bestimmten Querschnittes ermöglicht, um die Anzahl paarweiser Vergleiche von Technologie-Portfolien zu reduzieren. Dies ist vor allem dann vorteilhaft, wenn ein bestimmtes, ausgezeichnetes Technologie-Portfolio mit mehreren anderen Technologie-Portfolien verglichen werden soll, die von einem Betrachter als gleichwertig bezüglich der durchschnittlichen Werthaltigkeiten der betrachteten Technologieklassen eingeschätzt werden.

In einer vorteilhaften Ausgestaltungsform erfolgt nach dem Ableiten der mindestens einen technologischen Relevanz eine Visualisierung der technologischen Relevanz.

Dabei ist unter einer Visualisierung nicht nur eine bloße Darstellung von Datenpunkten der technologischen Relevanz zu verstehen, sondern die Visualisierung umfasst ferner eine Kenntlichmachung relevanter Bereiche technologischer Unterschiede und Gemeinsamkeiten für einen Betrachter eines Technologie-Portfolio-Vergleiches und/oder eine Kenntlichmachung von Bereichen mit Lücken eines Technologie-Portfolios, bzw. von Technologieklassen, die im Vergleich zu anderen Technologieklassen anderer Technologie-Portfolien sehr niedrige Werthaltigkeiten aufweisen.

In Abhängigkeit der Vorschriften zur Bestimmung einer Werthaltigkeit und/oder einer relativen Bedeutung und/oder einer Portfoliodiskrepanz und/oder einer Datenanalogie kann dadurch je nach Anwendungsfall eine gewünschte technologische Relevanz direkt für einen Betrachter sichtbar gemacht werden, um dadurch die für den Anwendungsfall geeigneten technologischen Ableitungen und/oder Aussagen und/oder auch strategische Maßnahmen treffen zu können.

In einer weiteren Ausgestaltungsform umfasst von mindestens drei Technologie-Portfolien zumindest ein Technologie-Portfolio ein Referenzportfolio und mittels der bestimmten relativen Bedeutungen wird mindestens ein Portfolioabstand bestimmt.

Durch Einschließen eines Technologie-Portfolios als Referenzportfolios wird ein Vergleich mindestes zweier Technologie-Portfolien zu dem Referenzportfolio ermöglicht.

Dabei ist unter einem Portfolioabstand eine Größe zu verstehen, die eine Portfoliodiskrepanz mit einer Datenanalogie derart kombiniert, dass sich aus dem Betrag des Portfolioabstands eine Aussage über eine Ähnlichkeit von Technologie-Portfolien treffen lässt, beispielsweise über eine Ähnlichkeit eines Technologie-Portfolios zu dem Referenzportfolio.

In einer weiteren Ausgestaltungsform werden mittels des Referenzportfolios mindestens zwei Portfolioabstände bestimmt. Dadurch kann eine Ähnlichkeit mindestens zweier Technologie-Portfolien zueinander bezogen auf ein Referenzportfolios bestimmt werden.

Dies ermöglicht eine direkte Aussage über eine relative Bedeutung einer Technologieklasse in zumindest zwei Technologie-Portfolien bezogen auf ein Referenzportfolio, beispielsweise eine Aussage, ob ein erstes Technologie-Portfolio eine größere technologische Ähnlichkeit zu einem Referenzportfolio aufweist als ein zweites Technologie-Portfolio.

In einer bevorzugten Ausführungsform erfolgt mittels der mindestens zwei Portfolioabstände eine Bestimmung einer Rangfolge der Portfolioabstände.

Dabei ist unter einer Rangfolge eine Sortierung der Portfolioabstände zu verstehen, um technologische Ähnlichkeiten zu einem Referenzportfolio für einen Benutzer schneller zugänglich zu machen.

Diese Sortierung kann beispielsweise aber nicht ausschließlich auch als eine Visualisierung mittels eines Kiviat-Diagramm erfolgen.

In einer vorteilhaften Ausgestaltungsform wird mittels des Referenzportfolios mindestens ein Verhältnis relativer Bedeutungen bestimmt.

Die Bestimmung eines Verhältnisses der relativen Bedeutungen, beispielsweise durch Bestimmung eines Quotienten der relativen Bedeutungen eines Technologie-Portfolios und eines Referenzportfolios ist eine weitere Möglichkeit, um einem Benutzer eine Bedeutung einer bestimmten Technologie zugänglich zu machen.

Dieses Verhältnis kann beispielsweise aber nicht ausschließlich auch als eine Visualisierung mittels eines Balkendiagramm erfolgen.

In einer bevorzugten Ausführungsform erfolgt die Ausführung des Verfahrens computergestützt. Auf diese Weise können große Datenmengen, also beispielsweise eine Vielzahl an Technologie-Elementen und/oder Technologie-Portfolien und/oder Technologieklassen und/oder Werthaltigkeiten und/oder relativer Bedeutungen und/oder Portfoliodiskrepanzen und/oder Datenanalogien und/oder technologische Relevanzen und/oder Querschnittsportfolien und/oder Visualisierungen der technologischen Relevanzen und/oder Portfolioabstände und/oder Rangfolgen von Portfolioabständen und/oder Verhältnisse relativer Bedeutungen bestimmt bzw. berechnet werden.

Durch Parallelisierungen dieser Bestimmungen und/oder Auslagerungen der Bestimmungen auf separate Recheneinheiten und/oder Graphikeinheiten kann eine noch effizientere und schnellere Bestimmung technologischer Relevanzen von Technologie-Portfolien erreicht werden.

Dies ermöglich erst einen Vergleich großer und komplexer Datenmengen und letztendlich ein übersichtliches Handling für einen Benutzer des Verfahrens, sei es durch Einsparungen in einer Rechenzeit und/oder durch anschauliche Visualisieren von Verfahrensschritten und/oder Zwischenergebnissen und/oder Endergebnissen und/oder durch Kenntlichmachen relevanter Bereiche in Ausgaben und/oder Diagrammen.

Des Weiteren beschreibt die vorliegende Erfindung ein Computerprogramm, welches man in einen Speicher einer programmierbaren Steuerung bzw. einer Recheneinheit einer Servereinheit laden kann. Mit diesem Computerprogramm können alle oder verschiedene vorab beschriebene Ausführungsformen des erfindungsgemäßen Verfahrens ausgeführt werden, wenn das Computerprogramm in der Steuerung oder Steuereinrichtung der Servereinheit läuft. Dabei benötigt das Computerprogramm eventuell Programmmittel, z.B. Bibliotheken und Hilfsfunktionen, um die entsprechenden Ausführungsformen des Verfahrens zu realisieren. Mit anderen Worten soll mit dem auf das Computerprogramm gerichteten Anspruch eine Software unter Schutz gestellt werden, mit welcher eine der oben beschriebenen Ausführungsformen des erfindungsgemäßen Verfahrens ausgeführt werden kann bzw. welche diese Ausführungsform ausführt. Dabei kann es sich bei der Software um einen Quellcode, der noch kompiliert und gebunden oder der nur interpretiert werden muss, oder um einen ausführbaren Softwarecode handeln, der zur Ausführung nur noch in die entsprechende Recheneinheit zu laden ist.

Ferner betrifft die vorliegende Erfindung ein computerlesbares Speichermedium, z.B. eine DVD, eine Blu-Ray-Disc, eine Festplatte oder einen USB-Stick, auf welchem elektronisch lesbare Steuerinformationen, insbesondere Software gespeichert ist. Wenn diese Steuerinformationen von dem Speichermedium gelesen und in eine Steuerung bzw. Recheneinheit einer Servereinheit gespeichert werden, können alle erfindungsgemäßen Ausführungsformen des vorab beschriebenen Verfahrens durchgeführt werden.

Die Vorteile des erfindungsgemäßen Computerprogramms und des erfindungsgemäßen computerlesbaren Speichermediums entsprechen im Wesentlichen den Vorteilen des erfindungsgemäßen Verfahrens, welche vorab im Detail ausgeführt sind. Hierbei erwähnte Merkmale, Vorteile oder alternative Ausführungsformen sind ebenso auch auf die anderen beanspruchten Gegenstände zu übertragen und umgekehrt. Mit anderen Worten können die Ansprüche, die beispielsweise auf ein Verfahren gerichtet sind, auch mit den Merkmalen, die in Zusammenhang mit einem Computerprogramm beschrieben oder beansprucht sind, weitergebildet sein. Die entsprechenden funktionalen Merkmale des Verfahrens werden dabei durch entsprechende Module ausgebildet.

Im Folgenden wird die Erfindung anhand der in den Figuren dargestellten Ausführungsbeispiele näher beschrieben und erläutert.

Es zeigen:

FIG 1      ein Flussdiagramm eines erfindungsgemäßen Verfahrens,

FIG 2      eine graphische Darstellung technologischer Relevanzen basierend auf Portfoliodiskrepanzen und Datenanalogien und

FIG 3      eine graphische Darstellung von Portfolioabständen basierend auf Portfoliodiskrepanzen und Datenanalogien.

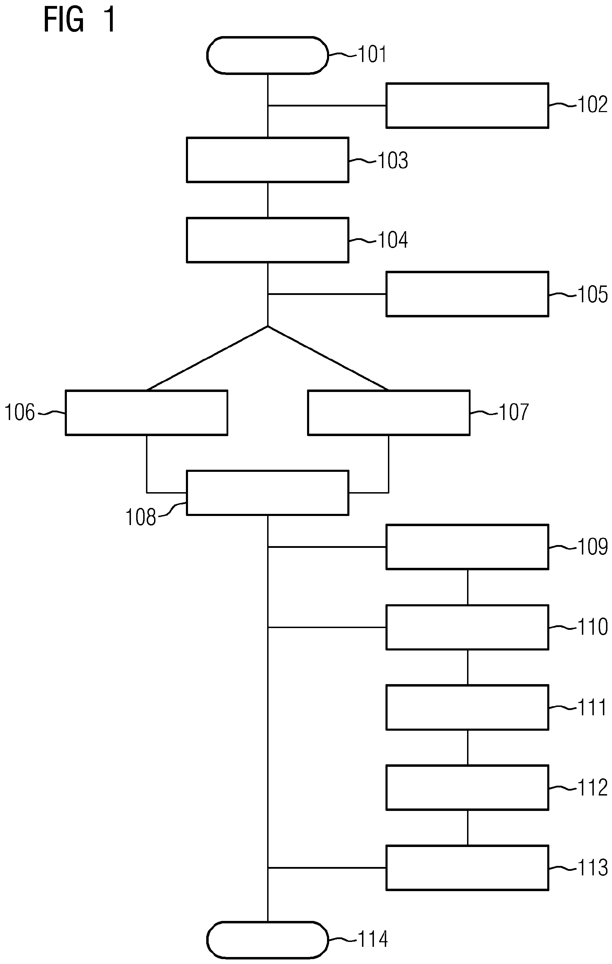

**FIG 1** zeigt ein Flussdiagramm eines erfindungsgemäßen Verfahrens. Das Verfahren umfasst die Verfahrensschritte 101 bis 114, wobei bei der Beschreibung der Verfahrensschritte 101 bis 114, auch Beschreibungsteile einschließlich der entsprechenden im Zusammenhang mit den in den anderen Figuren eingeführten Bezugszeichen Verwendung finden können.

Die Verfahrensschritte 101 bis 114 können dabei auch teilweise manuell, halb-automatisch oder automatisch durchgeführt werden und/oder auch durch ein entsprechendes Computerprogramm, das die Ausführung eines derartigen Verfahrens ermöglicht und/oder durch ein computerlesbares Speichermedium hierfür.

Ein erster Verfahrensschritt 101 kennzeichnet den Start einer Bestimmung einer technologischen Relevanz 207, 208, 209 wenigstens zweier Technologie-Portfolien wobei jedes Technologie-Portfolio mindestens ein Technologie-Element umfasst. Ein Technologie-Element umfasst beispielsweise eine technologische Beschreibung, eine Veröffentlichung, einen Fachartikel, eine Anzeige, eine Patentschrift, ein Gebrauchsmuster, ein Anforderungsprofil wie z.B. eine Stellenausschreibung oder ähnliche Publikationen mit technischem Inhalt. Ein Technologie-Portfolio umfasst mindestens eines der genannten Technologie-Elemente. Unter einer Technologieklasse ist ein Oberbegriff für eine bestimmte Technologie zu verstehen, der bestimmte Eigenschaften der bestimmten Technologie zusammenfasst.

Im Verfahrensschritt 102, einem optionalen Verfahrensschritt erfolgt eine Zuordnung mindestens eines Technologie-Elements aus jedem der wenigstens zwei Technologie-Portfolien zu mindestens einer Technologieklasse. Technologieklassen können einen oder mehrerer technologische Überbegriffe umfassen, sie können überlappend oder disjunkt sein, sie können eng oder breit gefasst sein. In diesem optionalen Verfahrensschritt wird ein Technologie-Element dabei mindestens einer Technologieklasse zugeordnet. Dadurch entsteht eine Abbildung von Technologie-Elementen auf Technologieklassen. Für bestimmte Anwendungen ist es vorteilhaft, wenn jedes Technologie-Element genau einer Technologieklasse zugeordnet wird, für andere Anwendungen können Mehrfachzuordnungen besser geeignet sein. Die Technologieklassen können hierbei von Anfang an festgelegt sein, sie können aber auch im Rahmen des Verfahrens bestimmt werden. Die Zuordnung selbst kann alternativ auch außerhalb des Verfahrens a priori erfolgen, beispielsweise aber nicht ausschließlich durch eine manuelle Zuordnung durch technische Experten, durch einen Künstliche-Intelligenz-Algorithmus und/oder durch einen Abgleich mit vorhandenen Zuordnungstabellen.

Verfahrensschritt 103 kennzeichnet eine Bestimmung mindestens einer Werthaltigkeit für mindestens eine Technologieklasse für jedes der wenigstens zwei Technologie-Portfolien. Unter einer Werthaltigkeit sind Werte zu verstehen, die mit einer Wichtigkeit und/oder einer Bedeutung für ein Technologie-Portfolio innerhalb einer betrachteten Technologieklasse assoziiert werden. Die Werthaltigkeit kann beispielsweise aber nicht ausschließlich die Anzahl der Technologie-Elemente umfassen, sie kann einen monetären Wert der zu Grunde gelegten Technologien oder auch der Technologie-Elemente an sich umfassen, sie kann auf einer vorher festgelegten Rangfolge aufbauen oder auf andere denkbare Weisen zusammengesetzt sein, sodass einem Portfolio ein gewisser Wert zugewiesen werden kann.

Im Verfahrensschritt 104 erfolgt eine Bestimmung einer relativen Bedeutung für mindestens eine Technologieklasse für jedes der wenigstens zwei Technologie-Portfolien. Unter einer relativen Bedeutung ist eine Normierung zu verstehen, die die Werthaltigkeit einer Technologieklasse in Bezug zu einem zugrunde liegenden Technologie-Portfolio setzt. Eine beispielhafte relative Bedeutung ist eine Werthaltigkeit einer Technologieklasse geteilt durch eine maximale Werthaltigkeit der Technologieklassen eines bestimmten Technologie-Portfolios.

Im Verfahrensschritt 105, einem optionalen Verfahrensschritt werden aus mindestens drei Technologie-Portfolien mindestens zwei Technologie-Portfolien durch eine Kombination zu einem Querschnittsportfolio zusammengefasst. Dabei ist unter einem Querschnittsportfolio ein Technologie-Portfolio zu verstehen, das zumindest zwei Technologie-Portfolien repräsentiert. Diese erfindungsmäße Repräsentation kann beispielsweise eine Bestimmung einer gemeinsamen relativen Bedeutung umfassen, beispielsweise durch Bestimmung eines Medians der jeweiligen relativen Bedeutungen, durch Bestimmung des Mittelwertes der jeweiligen relativen Bedeutungen oder durch Bestimmung von Extremwerten der jeweiligen relativen Bedeutungen. Dadurch wird eine einfachere Betrachtung eines bestimmten Querschnittes ermöglicht, um die Anzahl paarweiser Vergleiche von Technologie-Portfolien zu reduzieren.

Verfahrensschritt 106 kennzeichnet eine Bestimmung mindestens einer Portfoliodiskrepanz 201, 301 mittels der bestimmten relativen Bedeutung. Unter eine Portfoliodiskrepanz ist ein Maß für eine Verschiedenheit eines Technologie-Portfolios zu verstehen, beispielsweise eine Differenz zweier relativer Bedeutungen einer Technologieklasse unterschiedlicher Technologie-Portfolien.

Verfahrensschritt 107 kennzeichnet eine Bestimmung mindestens einer Datenanalogie 202, 302 mittels der bestimmten relativen Bedeutung. Unter einer Datenanalogie ist ein Maß für eine Gemeinsamkeit eines Technologie-Portfolios zu verstehen, beispielsweise eine Summe zweier relativer Bedeutungen einer Technologieklasse unterschiedlicher Technologie-Portfolien.

Im Verfahrensschritt 108 erfolgt ein Ableiten mindestens einer technologischen Relevanz 207, 208, 209 für mindestens eine Technologieklasse mittels der bestimmten mindestens einen Portfoliodiskrepanz 201, 301 und der bestimmten mindestens einen Datenanalogie 202, 302. Unter einer technologischen Relevanz 207, 208, 209 einer Technologieklasse ist eine Zuordnung oder eine Funktion zu verstehen, die eine Portfoliodiskrepanz 201, 301 und eine Datenanalogie 202, 302 miteinander in Verbindung setzt. Die Funktion kann beliebig gewählt werden, in einem einfachen Fall ist eine technologische Relevanz 207, 208, 209 eine paarweise Zuordnung von Portfoliodiskrepanzen 201, 301 zu den entsprechenden Werten der Datenanalogie 202, 302.

Im Verfahrensschritt 109, einem optionalen Verfahrensschritt, erfolgt eine Visualisierung der technologischen Relevanz 207, 208, 209. Dabei ist unter einer Visualisierung nicht nur eine bloße Darstellung von Datenpunkten der technologischen Relevanz 207, 208, 209 zu verstehen, sondern die Visualisierung umfasst ferner eine Kenntlichmachung relevanter Bereiche technologischer Unterschiede und Gemeinsamkeiten für einen Betrachter eines Technologie-Portfolio-Vergleiches und/oder eine Kenntlichmachung von Bereichen mit Lücken eines Technologie-Portfolios, bzw. von Technologieklassen, die im Vergleich zu anderen Technologieklassen anderer Technologie-Portfolien sehr niedrige Werthaltigkeiten aufweisen. In Abhängigkeit der Vorschriften zur Bestimmung einer Werthaltigkeit und/oder einer relativen Bedeutung und/oder einer Portfoliodiskrepanz 201, 301 und/oder einer Datenanalogie 202, 302 kann dadurch je nach Anwendungsfall eine gewünschte technologische Relevanz 207, 208, 209 direkt für einen Betrachter sichtbar gemacht werden, um dadurch die für den Anwendungsfall geeigneten technologischen Ableitungen und/oder Aussagen treffen zu können.

In Verfahrensschritt 110, ebenfalls ein optionaler Verfahrensschritt, umfasst von mindestens drei Technologie-Portfolien zumindest ein Technologie-Portfolio ein Referenzportfolio und die Bestimmung 104 der relativen Bedeutungen umfasst eine Bestimmung 110 mindestens eines Portfolioabstandes 303, 304. Durch Einschließen eines Technologie-Portfolios als Referenzportfolios wird ein Vergleich mindestes zweier Technolo-

logie-Portfolien zu dem Referenzportfolio ermöglicht. Dabei ist unter einem Portfolioabstand 303, 304 eine Größe zu verstehen, die eine Portfoliodiskrepanz 201, 301 mit einer Datenanalogie 202, 302 derart kombiniert, dass sich aus dem Betrag des Portfolioabstands 303, 304 eine Aussage über eine Ähnlichkeit von Technologie-Portfolios treffen lässt, beispielsweise über eine Ähnlichkeit eines Technologie-Portfolios zu einem Referenzportfolio.

In Verfahrensschritt 111, ein nach Verfahrensschritt 110 optionaler Verfahrensschritt, wird mittels des Referenzportfolios eine Bestimmung mindestens zweier Portfolioabstände 303, 304 durchgeführt. Dadurch kann eine Ähnlichkeit mindestens zweier Technologie-Portfolien zueinander bezogen auf ein Referenzportfolios bestimmt werden. Dies ermöglicht eine direkte Aussage über eine relative Bedeutung einer Technologieklasse in zumindest zwei Technologie-Portfolien bezogen auf ein Referenzportfolio, beispielsweise eine Aussage, ob ein erstes Technologie-Portfolio eine größere technologische Ähnlichkeit zu einem Referenzportfolio aufweist als ein zweites Technologie-Portfolio.

In Verfahrensschritt 112, ein nach Verfahrensschritt 111 optionaler Verfahrensschritt, umfasst die Bestimmung der mindestens zwei Portfolioabstände 303, 304 eine Bestimmung einer Rangfolge der Portfolioabstände 303, 304. Dabei ist unter einer Rangfolge eine Sortierung der Portfolioabstände 303, 304 zu verstehen, um technologische Ähnlichkeiten zu einem Referenzportfolio für einen Benutzer schneller zugänglich zu machen. Diese Sortierung kann beispielsweise auch als eine Visualisierung mittels eines Kiviat-Diagramms erfolgen.

In Verfahrensschritt 113, ebenfalls ein optionaler Verfahrensschritt, wird mittels des Referenzportfolios eine Bestimmung mindestens eines Verhältnisses relativer Bedeutungen durchgeführt. Die Bestimmung eines Verhältnisses der relativen Bedeutungen, beispielsweise durch Bestimmung eines Quotienten der relativen Bedeutungen eines Technologie-Portfolios und eines Referenzportfolios ist eine weitere Möglichkeit, um einem Benutzer eine Bedeutung einer bestimmten Technologie zugänglich zu machen. Dieses Verhältnis kann beispielsweise auch als eine Visualisierung mittels eines Balkendiagramm erfolgen.

Ein letzter Verfahrensschritt 114 kennzeichnet ein Ende einer Bestimmung einer technologischen Relevanz 207, 208, 209 wenigstens zweier Technologie-Portfolien wobei jedes Technologie-Portfolio mindestens ein Technologie-Element umfasst und wobei mindestens ein Technologie-Element aus jedem der wenigstens zwei Technologie-Portfolien zu mindestens einer Technologieklasse zugeordnet ist.

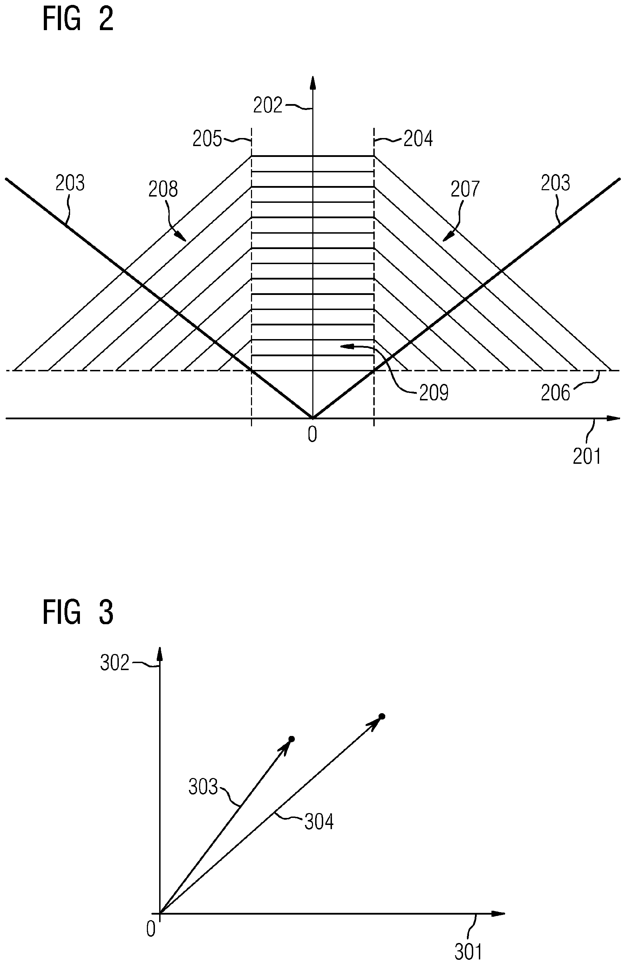

FIG 2 zeigt eine graphische Darstellung technologischer Relevanzen 207, 208, 209 basierend auf Portfoliodiskrepanzen 201, 301 und Datenanalogien 202, 302.

Hierbei erfolgt eine Visualisierung 109 der technologischen Relevanzen 207, 208, 209 derart, dass Portfoliodiskrepanzen 201, 301 auf einer Abszisse aufgetragen werden und Datenanalogien 202, 302 auf einer Ordinate.

In diesem Beispiel sind Portfoliodiskrepanzen 201, 301 als Differenz zweier relativer Bedeutungen einer Technologieklasse unterschiedlicher Technologie-Portfolien definiert und Datenanalogien 202, 302 als eine Summe zweier relativer Bedeutungen einer Technologieklasse unterschiedlicher Technologie-Portfolien. Dabei soll exemplarisch der Minuend der Differenz und der erste Summand der Summe eine relative Bedeutung eines ersten Technologie-Portfolios repräsentieren und der Subtrahend der Differenz und der zweite Summand der Summe eine relative Bedeutung eines zweiten Technologie-Portfolios für jeweils eine betrachtete Technologieklasse.

Zusammengefasst berechnet sich in diesem Beispiel eine Portfoliodiskrepanz 201, 301, abgekürzt durch P also durch:

$$P = B\_1 - B\_2.$$

Analog berechnet sich eine Datenanalogie 202, 302, abgekürzt durch D durch:

$$D = B\_1 + B\_2.$$

In dieser Nomenklatur bezeichnen $B\_1$ und $B\_2$ relative Bedeutungen einer Technologieklasse unterschiedlicher Technologie-Portfolien.

Daher liegen definitionsgemäß in diesem Beispiel alle Werte oberhalb einer Einhüllenden 203, die hier als eine Winkelhalbierende dargestellt ist.

Ist eine Portfoliodiskrepanz 201, 301 kleiner als Null, so ist in diesem Fall die relative Bedeutung einer betrachteten Technologieklasse in dem zweiten Technologie-Portfolio größer als in dem ersten Technologie-Portfolio.

Handelt es sich bei einer betrachteten Technologieklasse beispielhaft um die Klasse "Laden von Elektrofahrzeugen", so bedeutet dies, dass dieser Technologie im zweiten Technologie-Portfolio ein höherer Wert zugeschrieben wird als im ersten Technologie-Portfolio, je nach der im Verfahrensschritt 103 bestimmten Werthaltigkeit.

Liegt eine Portfoliodiskrepanz 201, 301 in einem Bereich 208 der technologischen Diskrepanz, also weiter vom Ursprung entfernt als eine zweite Grenze 205, kann es sich bei der betrachteten Technologieklasse um einen White Spot des ersten Technologie-Portfolios handeln, d.h., dass das zweite Technologie-Portfolio bezüglich dieser Technologieklasse mehr und/oder relevantere und/oder häufigere und/oder werthaltigere Technologie-Elemente als das erste Technologie-Portfolio aufweist, je nach Definition der im Verfahrensschritt 103 bestimmten Werthaltigkeit und nach Definition der zweiten Grenze 205.

Ist eine Portfoliodiskrepanz 201, 301 größer als Null, so ist in diesem Fall die relative Bedeutung einer betrachteten Technologieklasse in dem ersten Technologie-Portfolio größer als in dem zweiten Technologie-Portfolio.

Liegt eine Portfoliodiskrepanz 201, 301 in einem Bereich 207 der technologischen Diskrepanz, also weiter vom Ursprung entfernt als eine erste Grenze 204, kann es sich bei der betrachteten Technologieklasse um einen White Spot des zweiten Technologie-Portfolios handeln, d.h., dass das erste Technologie-Portfolio bezüglich dieser Technologieklasse mehr und/oder relevantere und/oder häufigere und/oder werthaltigere Technologie-Elemente als das zweite Technologie-Portfolio aufweist, je nach Definition der im Verfahrensschritt 103 bestimmten Werthaltigkeit und nach Definition der ersten Grenze 204.

Der zweite Bereich technologischer Relevanz 208 entspricht in diesem Beispiel somit einem Bereich in dem Technologieklassen liegen, die für ein erstes Technologie-Portfolio White-Spots darstellen, der erste Bereich technologischer Relevanz 207 entspricht in diesem Beispiel einem Bereich in dem Technologieklassen liegen, die für ein zweites Technologie-Portfolio White-Spots darstellen und der dritte Bereich technologischer Relevanz 209 entspricht einem Bereich in dem Technologieklassen liegen, die für beide betrachtete Technologie-Portfolien einen ähnlichen Stellenwert haben.

FIG 3 zeigt eine graphische Darstellung von Portfolioabständen 303, 304 basierend auf Portfoliodiskrepanzen 201, 301 und Datenanalogien 202, 302.

Diese beispielhafte Darstellung verdeutlich eine zusätzliche Ausführung der Verfahrensschritte 110 und 111. Von mindestens drei Technologie-Portfolien umfasst zumindest ein Technologie-Portfolio ein Referenzportfolio. Durch Einschließen eines Technologie-Portfolios als Referenzportfolios wird ein Vergleich von Technologie-Portfolien zu dem Referenzportfolio ermöglicht und durch die Bestimmung 110 zweier Portfolioabstände 303, 304 kann eine Ähnlichkeit der zwei Technologie-Portfolien zueinander bezogen auf das Referenzportfolio bestimmt werden.

Ist eine relative Bedeutung einer Technologieklasse in einem ersten Technologie-Portfolio größer als in einem zweiten Technologie-Portfolio, dann beinhaltet das erste Technologie-Portfolio im Vergleich zu dem Referenzportfolio bezüglich dieser Technologieklasse mehr und/oder relevantere und/oder häufigere und/oder werthaltigere Technologie-Elemente als das zweite Technologie-Portfolio, je nach Definition der im Verfahrensschritt 103 bestimmten Werthaltigkeit.

In der dargestellten Figur ist ein erster Portfolioabstand 303 kleiner als ein zweiter Portfolioabstand 304. In diesem Beispiel sind die Portfolioabstände 303, 304 als Abstände zu einem Koordinatenursprung definiert.

Dies bedeutet, dass das zu dem ersten Portfolioabstand korrespondierende erste Technologie-Portfolio im Vergleich zu dem Referenzportfolio bezüglich dieser Technologieklasse mehr und/oder relevantere und/oder häufigere und/oder werthaltigere Technologie-Elemente als das zu dem zweiten Portfolioabstand korrespondierende zweite Technologie-Portfolio, je nach Definition der im Verfahrensschritt 103 bestimmten Werthaltigkeit.

Zudem lassen sich für alle betrachteten Technologieklassen und alle betrachtet Technologie-Portfolien die Portfolioabstände in eine Rangfolge bringen. Diese Sortierung kann auch als eine Visualisierung mittels eines Kiviat-Diagramm erfolgen.

Den Rang 1 für eine bestimmte Technologieklasse wird dann beispielsweise demjenigen Technologie-Portfolio zugewiesen, dessen Portfolioabstand am geringsten ist.

Anstelle der dargestellten Portfolioabstände lässt sich beispielsweise auch ein Verhältnis der relativen Bedeutungen verwenden. Die Bestimmung eines Verhältnisses der relativen Bedeutungen erfolgt beispielsweise durch Bestimmung eines Quotienten der relativen Bedeutungen eines Technologie-Portfolios und eines Referenzportfolios.

Diese Verhältnisse können beispielsweise mittels eines Balkendiagramms visualisiert werden, um sichtbar zu machen, welche Technologieklassen sich in den verschiedenen Technologie-Portfolien in Bezug auf ein Referenzportfolio unterscheiden und gegebenenfalls weiter untersucht werden müssen, um anschließende technologische und/oder strategische Ableitungen treffen zu können.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Zusammenfassend betrifft die Erfindung ein Verfahren zur Bestimmung einer technologischen Relevanz wenigstens zweier Technologie-Portfolien, ein entsprechendes Computerprogramm, das die Ausführung eines derartigen Verfahrens ermöglicht, sowie ein computerlesbares Speichermedium hierfür.
Dabei umfasst jedes Technologie-Portfolio mindestens ein Technologie-Element und mindestens ein Technologie-Element aus jedem der wenigstens zwei Technologie-Portfolien ist mindestens einer Technologieklasse zugeordnet.
Die technologische Relevanz wird mittels mindestens einer Portfoliodiskrepanz und mittels mindestens einer Datenanalogie bestimmt.

Bezugszeichenliste

| 101 | Verfahrensschritt |
|---|---|
| 102 | Verfahrensschritt |
| 103 | Verfahrensschritt |
| 104 | Verfahrensschritt |
| 105 | Verfahrensschritt |
| 106 | Verfahrensschritt |
| 107 | Verfahrensschritt |
| 108 | Verfahrensschritt |
| 109 | Verfahrensschritt |
| 110 | Verfahrensschritt |
| 111 | Verfahrensschritt |
| 112 | Verfahrensschritt |
| 113 | Verfahrensschritt |
| 114 | Verfahrensschritt |
| 201 | Portfoliodiskrepanz |
| 202 | Datenanalogie |
| 203 | Einhüllende |
| 204 | erste Grenze |
| 205 | zweite Grenze |
| 206 | dritte Grenze |
| 207 | erster Bereich technologischer Relevanz |
| 208 | zweiter Bereich technologischer Relevanz |
| 209 | dritter Bereich technologischer Relevanz |
| 301 | Portfoliodiskrepanz |
| 302 | Datenanalogie |
| 303 | Portfolioabstand |
| 304 | Portfolioabstand |

**Patentansprüche**

1. Verfahren zur Bestimmung einer technologischen Relevanz wenigstens zweier Technologie-Portfolien wobei jedes Technologie-Portfolio mindestens ein Technologie-Element umfasst und wobei mindestens ein Technologie-Element aus jedem der wenigstens zwei Technologie-Portfolien mindestens einer Technologieklasse zugeordnet ist, umfassend folgende Schritte:

   - Bestimmung (103) mindestens einer Werthaltigkeit für mindestens eine Technologieklasse für jedes der wenigstens zwei Technologie-Portfolien,
   - Bestimmung (104) einer relativen Bedeutung für mindestens eine Technologieklasse für jedes der wenigstens zwei Technologie-Portfolien,
   - Bestimmung (106) mindestens einer Portfoliodiskrepanz (201, 301) mittels der bestimmten relativen Bedeutung,
   - Bestimmung (107) mindestens einer Datenanalogie (202, 302) mittels der bestimmten relativen Bedeutung,
   - Ableiten (108) mindestens einer technologischen Relevanz (207, 208, 209) für mindestens eine Technologieklasse mittels der bestimmten mindestens einen Portfoliodiskrepanz (201, 301) und der bestimmten mindestens einen Datenanalogie (202, 302) .

2. Verfahren nach Anspruch 1, **dadurch gekennzeichnet, dass** aus mindestens drei Technologie-Portfolien mindestens zwei Technologie-Portfolien durch eine Kombination (105) zu einem Querschnittsportfolio zusammengefasst werden.

3. Verfahren nach einem der Ansprüche 1 oder 2, **dadurch gekennzeichnet, dass** das Ableiten (108) der mindestens einen technologischen Relevanz (207, 208, 209) eine Visualisierung (109) der technologischen Relevanz (207, 208, 209) umfasst.

4. Verfahren nach einem der Ansprüche 1 bis 3, **dadurch gekennzeichnet, dass** von mindestens drei Technologie-Portfolien zumindest ein Technologie-Portfolio ein Referenzportfolio umfasst und wobei die Bestimmung (104) der relativen Bedeutungen eine Bestimmung (110) mindestens eines Portfolioabstandes (303, 304) umfasst.

5. Verfahren nach Anspruch 4, **dadurch gekennzeichnet, dass** mittels des Referenzportfolios eine Bestimmung (111) mindestens zweier Portfolioabstände (303, 304) erfolgt.

6. Verfahren nach Anspruch 5, **dadurch gekennzeichnet, dass** die Bestimmung (111) der mindestens zwei Portfolioabstände (303, 304) eine Bestimmung (112) einer Rangfolge der Portfolioabstände (303, 304) umfasst.

7. Verfahren nach Anspruch 4, **dadurch gekennzeichnet, dass** mittels des Referenzportfolios eine Bestimmung (113) mindestens eines Verhältnisses relativer Bedeutungen erfolgt.

8. Verfahren nach einem der Ansprüche 1 bis 7, **dadurch gekennzeichnet, dass** das Verfahren computergestützt ausgeführt wird.

9. Computerprogramm, welches direkt in eine Speichereinheit einer programmierbaren Steuereinrichtung einer Servereinheit ladbar ist, mit Programm-Mitteln, um das Verfahren nach einem der Ansprüche 1 bis 8 auszuführen, wenn das Computerprogramm in der Steuereinrichtung der Servereinheit ausgeführt wird.

10. Computerlesbares Speichermedium mit darauf gespeicherten elektronisch lesbaren Steuerinformationen, welche derart ausgestaltet sind, dass sie bei Verwendung des Speichermediums in einer Steuereinrichtung einer Servereinheit das Verfahren nach einem der Ansprüche 1 bis 8 durchführen.

FIG 1

## FIG 2

## FIG 3

Europäisches
Patentamt

European
Patent Office

Office européen
des brevets

# EUROPÄISCHER RECHERCHENBERICHT

**Nummer der Anmeldung**

**EP 21 19 9448**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2008/091620 A1 (VOLLENWEIDER MARC [AT] ET AL) 17. April 2008 (2008-04-17)<br>* Absatz [0022] - Absatz [0023] *<br>* Absatz [0036] *<br>* Absatz [0099] - Absatz [0100] *<br>----- | 1-10 | INV.<br>G06Q40/00<br>G06Q50/18 |
| X | US 2012/303537 A1 (BADER MARTIN [CH] ET AL) 29. November 2012 (2012-11-29)<br>* Absatz [0152] - Absatz [0165] *<br>----- | 1-10 | |
| X | Ernst Holger ET AL: "The Patent Asset Index - A new approach to benchmark patent portfolios - ScienceDirect",<br>World Patent Information,<br>1. März 2011 (2011-03-01), Seiten 34-41,<br>XP055901047,<br>Gefunden im Internet:<br>URL:https://www.sciencedirect.com/science/article/pii/S0172219010000864<br>[gefunden am 2022-03-14]<br>* Absatz [03.3] - Absatz [03.5] *<br>----- | 1-10 | RECHERCHIERTE SACHGEBIETE (IPC)<br><br>G06Q |

Der vorliegende Recherchenbericht wurde für alle Patentansprüche erstellt

| Recherchenort | Abschlußdatum der Recherche | Prüfer |
|---|---|---|
| Berlin | 14. März 2022 | Bengtsson, Johan |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

**EP 21 19 9448**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**14-03-2022**

| Im Recherchenbericht angeführtes Patentdokument | Datum der Veröffentlichung | Mitglied(er) der Patentfamilie | Datum der Veröffentlichung |
|---|---|---|---|
| US 2008091620 A1 | 17-04-2008 | KEINE | |
| US 2012303537 A1 | 29-11-2012 | CH 705018 A2 | 30-11-2012 |
| | | DE 102012007527 A1 | 29-11-2012 |
| | | US 2012303537 A1 | 29-11-2012 |

Für nähere Einzelheiten zu diesem Anhang : siehe Amtsblatt des Europäischen Patentamts, Nr.12/82